# EUROPEAN PATENT SPECIFICATION

(11) **EP 1 324 449 B1**
(45) Date of publication and mention of the grant of the patent: **16.06.2010**
(21) Application number: 02445168.4
(22) Date of filing: 04.12.2002
(51) Int. Cl.: H02G 1/12

(54) **A cable-stripping tool (device)**
Kabelabmantelungswerkzeug
Outil à dénuder pour câbles

(30) Priority: 19.12.2001 SE 0104299
(43) Date of publication of application: 02.07.2003
(73) Proprietor: Pressmaster AB, 796 21 Älvdalen (SE)
(72) Inventor: Tapper, Johan, 776 35 Hedemora (SE)
(74) Representative: Janson, Ronny

(56) References cited:
- EP-A- 0 871 270
- US-A- 4 805 302

## Description

The present invention relates to a cable-stripping tool of the kind defined in the preamble of Claim 1.

Cable-stripping devices of the aforesaid kind are known from GB-A-22 15 143 and U.S. 4,640,009 for instance. Such devices/tools include two parts which are movable linearly in relation to each other and which carry respectively an abutment means and a cutting blade with an associated cable support that restricts the cutting depth of the blade. Biasing means urge the parts towards each other, so that a cable placed between the abutment means and the blade will be clamped against the blade. Tools of this kind function to establish a radial cut around the cable. The tool has a finger opening spaced from a tool guide that receives the cable, so that a user can readily twist the tool, and therewith the blade, around the cable. The known devices/tools are of a kind included by the preamble of Claim 1.

One drawback with the known tools it that they are relatively difficult to open against the spring bias, in order to allow insertion of a cable to be stripped. For instance, GB-A 22 15 143 teaches spring means that bias the linearly movable main parts of the tool towards one another. In order to open the tool, the user needs to move the tool parts apart, which is difficult to achieve even though one part of the tool can be gripped and the other part has a projection/dogging element that enables the second part to be pressed away from the first part with the thumb of the hand gripping the tool.

US Patent 4,805,302 (D1) discloses a wire stripper with a body and one or more circular cutting blades. The body has a cable accepting opening generally through its center into which the circular blades partially protrude. The blades are mounted on a slide being movable back and forth within the body. When an extension of the slide is depressed toward the center of the body the blades are withdrawn from the cable accepting opening and a cable may be inserted therethrough. Different cable diameters can be accommodated by opening the body and replacing one or more of the circular blades.

Accordingly, one object of the invention is to provide a tool of the aforedescribed kind that can be readily and comfortably manoeuvred with one hand when placing the cable into the tool.

A further object is to provide a tool that will enable the cutting depth of the blade to be set in a positive and comfortable fashion and, at the same time, stabilise the position of the cable or cable on the support.

These objects are achieved by means of the invention.

The invention is defined in the accompanying independent Claim 1. A particularly preferred embodiment of the invention is defined in the accompanying dependent Claim 2. Further embodiments of the invention will be apparent from the remaining dependent Claims.

According to one important feature of the invention, the tool arrangement is such that the main parts of the tool are biased in a direction away from each other by the spring element, and can be moved towards each other against the action of the spring bias, by virtue of the user squeezing the tool in the direction of relative movement of said parts with one hand, by actuation of the opposing ends of the tool in the movement direction of said parts. The tool shall have a length which enables it to be gripped comfortably in the user's hand for squeezing said parts together in the illustrated manner. The tool will also preferably include a rotatable support element which includes around its periphery supports which together with a fixed cutting blade define different blade cutting depths. The tool will also limit the possibility of movement of the cable along the support element. This is achieved by virtue of the fact that the support element has the form of a ring whose inner periphery carries the various supports. The ring-shaped support element may carry signs which indicate the cutting depth that has been established in the instant position of rotation of the ring in rotation to a read-off mark on the tool-part at which the support element is rotatably mounted.

The inner periphery of the support element has a polygonal shape around at least a part of its perimeter, wherein the sides of the polygon define supports located at different distances from the rotational axis of the support element, i.e. from the blade edge when the support elements are situated adjacent the cutting blade.

The supports which lie adjacent to a support that is in a co-operative position with the cutting blade restrict the possibility of the cable sliding along the support concerned.

The abutment may have a wedged-shape so as to prevent displacement of the cable circumferentially in relation to to the abutment.

The invention will now be described in more detail by way of example and with reference to the accompanying drawings.

Fig. 1 is a schematic plan view of an inventive tool.

Fig. 2 is a schematic section view of the tool, taken in a plane which is parallel with the plan view of Fig. 1.

Fig. 3 illustrates the cable stripping opening of the tool exposed for insertion of a cable thereinto.

The tool 10 includes two main parts 1, 2 which are linearly movable in relation to one another, in a direction that stretches between the short ends of the tool. A ring 4 is rotatably mounted in one main part 1. The outer periphery 15 of the ring 4 is received in a corresponding opening 42 through the part 1. The ring 4 has an outwardly projecting peripheral flange 15 that includes markings 46 spaced peripherally around said flange and capable of being read against a read-off line 17 on the part 1. The flange 45 is exposed outwardly of the part 1, so as to enable the ring 4 to be readily rotated manually, via the flange 45.

The inner wall of the ring 4 has a polygonal configuration which is comprised of a number of supports 41 that lie at different distances from the rotational axis 27 of the ring 4. The part 1 carries a cutting blade 3 whose cutting edge is exposed in the ring cavity at its portion facing towards the part 2.

The part 2 extends into the upper portion of the part 1 through the medium of a pair of posts 21, and is connected to a crosspiece 22. The part 1 has a recess which receives the portions 21, 22 of the part 2. The upper end wall 18 of the part 1 defines an abutment surface 11 for a pair of spring elements 5, which also act on the crosspiece 22. The springs 5 include two spring legs and a winding turn located between said legs and received on an associated guide pin 16 in the part 1. The springs 5 form pressure springs that act between the end wall 18 and the crosspiece 22 for moving the parts 1, 2 away from each other. A latching clement 14, 15 prevents the parts 1, 2 from being parted by the springs 5 beyond a chosen limit position. The yoke 22 forms an angled abutment 23. The part 2 has a finger opening 20 at its exposed end, the axis of said opening being parallel with the axis of the ring 4.

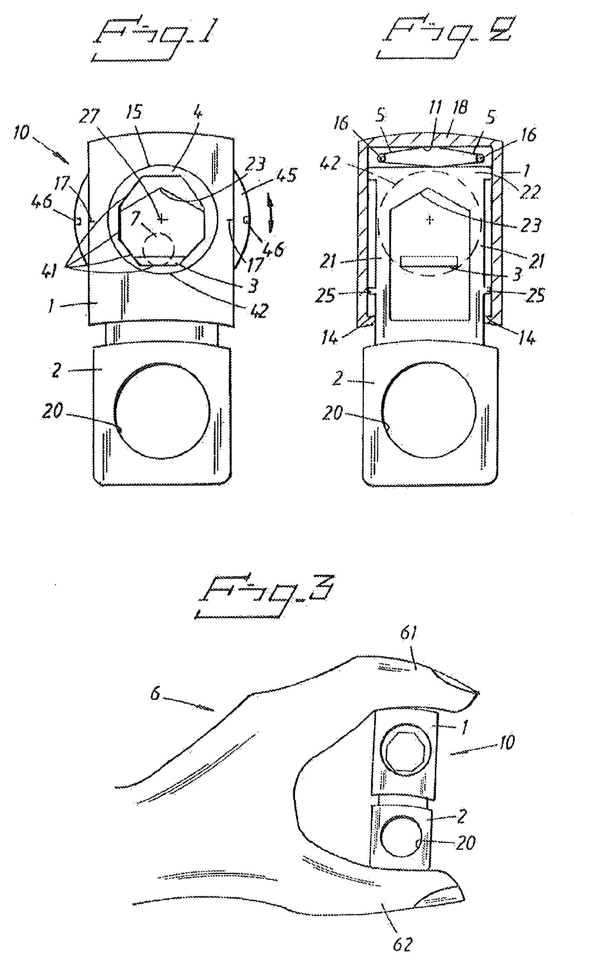

Fig. 3 shows that the placement of the supports 41 around the inner perimeter of the ring 4 and the rotational mounting of the ring 4 in the part 1 enables a limited length of the tool 10 to be achieved in the relative direction of displacement of the parts 1, 2, so that the tool 10 can be comfortably gripped between the index finger 61 and the thumb 62 of one hand for squeezing of the tool 10 against the action of the springs 5, so that the abutment 23 will expose the opening of the ring 4 and therewith enable the cable to be inserted therein, whereafter the load on the tool is relieved so that the abutment 23 drives the cable 7 against the cutting blade 3, which cuts into the cable 7 to a depth defined by the support 41 located at that instance in the co-operating position relative to the blade edge 3. It will be noted that the cutting depth of the blade 3 can be set easily, by rotating the ring 4 via its exposed ring-flange 45. When the cable 7 is firmly gripped, the operator is able to insert a finger into the opening 20 of the part 2 and turn the tool 10 around the cable 7 through one revolution, whereafter the tool can be displaced axially towards the end of the cable to strip-off the cut cable casing. Alternatively, the tool can be squeezed to enable it to be removed from the cable 7.

Fig. 1 shows the tool 10 in a squeezed state, and shows that the edge of the cutting blade is exposed in the opening of the ring 4, when viewing the tool in the axial direction of the ring. The abutment 22, 23 is shown in the upper part of the ring opening for the sake of clarity. When the load on the tool is removed, the abutment 22, 23 moves towards the cutting blade 3. The cutting blade 3 may be replaceable and swapped with blades whose edges have a different angle to the axis of the ring, so as to provide other cutting-depth ranges. The cutting blade 3 is conveniently perpendicular to the direction of relative displacement of said tool parts, so that the cutting depth of the blade will be generally the same in both possible directions of rotation of the tool around the cable 7.

## Claims

1. A cable-stripping tool comprising two parts (1,2) which are movable linearly towards and away from each other, a cutting blade (3) which is carried by one part (1), a support element (4,41) for a cable (7) which is carried by said one part (1), an abutment (22, 23) which is carried by the other part (2),spring means (5) which mutually bias said parts away from each other in their directions of movement;
whereby the tool is arranged in a manner that the cable (7) can be inserted between the abutment and the cutting blade (3) when said parts are mutually displaced in their respective directions against the bias of said spring element,
whereby the cable (7) is clamped between the abutment (22,23) on the one hand and the cutting blade (3) on the other hand when the tool is relieved of toad, wherein the tool
includes a through-passing opening for receiving the cable (7), wherein at least one of the parts (1,2) is ring-shaped,
and wherein the support (4,41) for the cable is placed at a distance from the edge of the cutting blade (3), said distance defining the depth to which the cutting blade 83) penetrates the cable (7),
**characterised in that**
the length of the tool in the direction of movement of said parts (1,2) is adapted to enable a user to apply a squeezing or compression force against the two mutually opposing end-parts of the tool in the direction of movement of said parts with one band, so as to expose the cable receiving opening;
said distance between the support and the edge of the cutting blade (3) is adjustable, by means of a support element (4,41) which
is rotatably mounted on said first part (1),
has the form of a ring, and
is provided with an inner periphery having a polygonal shape around at least a part of its perimeter, each of the sides of the polygon defining a support,
which supports are located at different distances from the rotational axis of the support element.

## Patentansprüche

1. Kabelabmantelungswerkzeug mit zwei Teilen (1, 2), die linear aufeinander zu und voneinander weg bewegbar sind, einem von einem Teil (1) getragenen Schneidmesser (3), einem von diesem Teil (1) getragenen Widerlagerelement (4, 41) für ein Kabel (7), einem vom anderen Teil (2) getragenen Anschlag (22, 23), Federmitteln (5), welche die Teile in ihrer Bewegungsrichtung gemeinsam voneinander weg vorspannen, wobei das Werkzeug so angeordnet ist, dass das Kabel (7) zwischen Anschlag und Schneidmesser (3) eingeführt werden kann, wenn die Teile gegen die Vorspannung des Federelements in ihre entsprechenden Bewegungsrichtungen gegenseitig verschoben sind, wobei das Kabel (7) zwischen einerseits dem Anschlag (22, 23) und andererseits dem Schneidmesser (3) eingeklemmt wird, wenn das Werkzeug losgelassen wird, wobei das Werkzeug eine Durchgangsöffnung zur Aufnahme des Kabels (7) umfasst und wobei mindestens eines der Teile (1, 2) ringförmig ist, und wobei das Widerlager (4, 41) für das Kabel von der Kante des Schneidmessers (3) beabstandet angebracht ist und dieser Abstand die Eindringtiefe des Schneidmessers (3) in das Kabel (7) festlegt, **dadurch gekennzeichnet, dass** die Länge des Werkzeugs in der Bewegungsrichtung der Teile (1, 2) so angepasst ist, das der Benutzer mit einer Hand eine quetschende oder zusammendrückende Kraft auf die einander gegenüberstehenden Enden des Werkzeugs in der Bewegungsrichtung der Teile auszuüben kann, um die Öffnung für die Aufnahme des Kabels freizulegen, wobei der Abstand zwischen Widerlager und Kante des Schneidmessers (3) mittels eines Widerlagerelements (4, 41) einstellbar ist, welches auf dem ersten Teil (1) drehbar befestigt ist, die Form eines Rings hat und zumindest längs eines Teils seines Umfangs mit einer inneren Umfangsfläche von Polygongestalt versehen ist, wobei jede Seite des Polygons ein Widerlager bildet, wobei die Widerlager sich in unterschiedlichen Abständen von der Rotationsachse des Widerlagerelements befinden.

## Revendications

1. Outil pour dénuder des câbles comprenant deux parties (1, 2) qui sont mobiles linéairement pour se rapprocher et s'éloigner l'une de l'autre, une lame de coupe (3) qui est portée par une partie (1), un élément support (4, 41) pour une câble (7) qui est porté par ladite une partie (1), une butée (22, 23) qui est portée par l'autre partie (2), des moyens élastiques (5) forçant respectivement lesdites parties à s'éloigner l'une de l'autre dans leurs directions de mouvement ; dans lequel l'outil est agencé de façon que le câble (7) puisse être inséré entre la butée et la lame de coupe (3) lorsque lesdites parties sont mues dans leurs dilections respectives à l'encontre du forçage desdits moyens élastiques,
dans lequel le câble (7) est pincé entre la butée (22, 23) d'une part et la lame de coupe (3) d'autre part lorsque l'outil est exempt de pression, dans lequel l'outil présente une ouverture traversante pour recevoir le câble (7), dans lequel au moins une des parties (1, 2) est en forme d'anneau,
est dans lequel le support (4, 41) pour le câble est positionné à une distance de l'arête de la lame de coupe (3), ladite distance définissant la profondeur à laquelle la lame de coupe (3) pénètre dans le câble (7),
**caractérisé en ce que**
la longueur de l'outil dans la direction du mouvement desdites parties (1,2) est adaptée pour autoriser un utilisateur à appliquer une force de serrage ou de compression contre les extrémités respectivement opposées de l'outil, dans la direction du mouvement desdites parties, avec une main, afin de découvrir l'ouverture de réception du câble ;
ladite distance entre le support et l'arête de la lame de coupe (3) est ajustage au moyen d'un élément support (4,41) qui
est monté à rotation sur ladite première partie (1),
présente la forme d'un anneau, et
est pourvu d'un pourtour intérieur ayant une forme polygonale autour d'au moins une partie de son périmètre, chacune des faces du polygone définissant un support,
les supports se situant à différentes distances de l'axe de rotation de l'élément support.
